# EUROPEAN PATENT SPECIFICATION

(11) **EP 2 500 162 B1**
(45) Date of publication and mention of the grant of the patent: **08.04.2015**
(21) Application number: 12157048.5
(22) Date of filing: 27.02.2012
(51) Int. Cl.: B29C 65/44, B29C 65/50, B62D 29/00

(54) **Structural component and method for producing**
Strukturkomponente und Verfahren zur Herstellung
Composant structurel et procédé de production

(30) Priority: 16.03.2011 NL 2006408
(43) Date of publication of application: 19.09.2012
(73) Proprietor: Polytec Composites NL B.V., 4704 RG Roosendaal (NL)
(72) Inventor: Radlmayr, Karl Michael, 4020 Linz (AT); Suhre, Konstantin, 49525 Lengerich (DE); van Koert, Cornelis Gerardus, 1613 LB Grootebroek (NL)
(74) Representative: Grootscholten, Johannes A.M.

(56) References cited:
- EP-A2- 1 508 478
- DE-A1-102007 009 928
- US-A- 2 247 558
- US-A- 3 953 910
- US-A1- 2004 028 858
- US-B1- 6 421 979

## Description

The present invention relates to a method for assembling structural component, for instance for a vehicle, the method comprising: providing a metal part defining an accommodating space; providing a plastic insert having an outer shape at least approximately adapted to the space and accommodating the insert in the space, where the method further comprising: heating the metal part to an elevated temperature; and forming the insert at least partially from thermoplastic material.

DE-10-2007-009928 discloses a method acknowledged to constitute the closest prior art in relation to the appended independent claim.

The present invention has for an object to remedy or to at least alleviate the problems of the prior art, to which end a method according to the present invention is defined by all features in combination of the appended method claim 1, including the features of the characterizing portion thereof, which, at least, are novel over the above identified closest prior art according to DE-10-2007-009928 and involve an inventive step.

When following the teachings of the present invention, the resulting assembly is more robust and reliable, and can be produced faster and/or against lower costs. Moreover these benefits and advantages are achieved, as a consequence of which the invention is not only novel, but also involves an inventive step. It is further noted, that when following the invention, an optimum fit of the insert in space defined by the metal is achieved, which contribute to the resistance thereof against buckling and increase (torsion) stiffness.

According to the invention, the method exhibits the feature that the metal part is formed, prior to assembly, in a temperature elevating process, such as press hardening, and is thereafter left to cool to the elevated temperature at least approximately sufficient to melt the thermoplastic material, while applying the pressure to accommodate the insert. By way of example only, it is mentioned here that such elevated temperatures (elevated relative to room temperature) can preferably be between 150 and 300 °C, which would cover polypropylene (PP) as well as all if not most of the polyamide (PA) types of thermoplastic material of the insert. By allowing the metal to cool from a possibly very much elevated temperature to one that is just sufficient to melt the thermoplastic material (in combination with the applied pressure) excessive melting of the thermoplastic material may be prevented. By appropriate selection of the temperature after cooling to allow the insert to be accommodated, the amount of melt can be minimized, again contributing to an optimized method. In particular during forming the metal part, often a step of press hardening the metal part is performed, wherein the temperature of the metal part is raised to for instance approximately between 850°C and 950°C, depending on the type of metal used. Such heating provides more than sufficient heating of the metal part to allow cooling to a temperature most suited for melting (a bit of) the thermoplastic insert, for instance when the metal part has cooled down to approximately between 200°C and 300°C, preferably about 250°C, which is a proper melting temperature for many thermoplastic materials, in particular polyamide (PA). For other thermoplastic materials the desired melting temperature may be higher or lower, depending on the actually selected thermoplastic material.

Within the scope of the present invention as set out above and in the appended independent method claim, several preferred and consequently non limiting embodiments are to be envisaged, as set out in the appended dependent method claims. Also other embodiments can be devised within the scope of the invention, other than those set out in the dependent claims.

In a preferred embodiment of the invention, the method exhibits the feature that the metal part comprises at least one anchor for the thermoplastic material to engage during method and hold after curing of the thermoplastic material through cooling thereof. Also the method comprises providing the metal part with at least one anchor for the thermoplastic material to engage during method and allowing the thermoplastic material to cure through cooling thereof and to thereafter hold the anchor. Thus the connection between the metal part and the plastic insert can be dramatically improved, at no or hardly any additional costs, since the anchor can be embodied as an integral or additional component or element relative to the metal part. For instance the anchor could be formed as an undercut; an incision; a ridge; a depression; a protrusion; an indentation; a surface roughening on a surface of the metal part; a hold enhancer; et cetera. Such and other shapes and forms of the anchor with the metal part may be imparted during a pre-method step, such as press hardening of the metal, in particular though not exclusively steel, part to minimize additional costs and time consumption. In automotive applications the metal could preferably be manganese-bor alloyed steel, such as for example 22MnB5.

In another preferred embodiment the method according to the invention even may exhibit the feature that the insert is at least partially oversized relative to the space of the metal part. Correspondingly, the method may exhibit the feature of oversizing the insert at least partially relative to the space of the metal part. The oversize of the plastic insert provides for an adequate amount of melt material from the oversized thermoplastic insert to further improve the hold on the anchor. In such an embodiment the method may exhibit the feature that the insert is oversized in at least one location corresponding with the at least one anchor. Correspondingly, the method may exhibit the feature of oversizing the insert in at least one location corresponding with the at least one anchor. When oversizing the insert only at locations corresponding with the anchor(s), the added amount of thermoplastic material may be minimized, contributing to further optimisation of the method and method in terms of costs for materials, et cetera. Any oversize will in principle be appropriate, but by way of example oversizes within the range of > 0% and up to for example 5 or 10% may occur.

In yet another preferred embodiment of the invention, the method may exhibit the feature that the insert contains reinforcements from the group, comprising: metal wires; fibrous material, such as glass or carbon fibres; et cetera. Such reinforcements serve to improve the strength of the resulting method.

In yet another preferred embodiment of the invention, the method may exhibit the feature that the thermoplastic material comprises at least one material from the group, comprising: polypropylene (PP); polyethylene (PE); polyamide (PA); et cetera.

Herein below the present invention will be further elucidated referring to the appended drawing showing a limited number of embodiments of the present invention, wherein the same or similar reference numbers may be employed to indicate the same, similar or equivalent components, elements and features, whilst it must be emphasized here that none of the embodiments described below and shown in the drawing may be (mis)construed as limiting on the invention, since the invention is defined in the broadest scope thereof in the appended independent claim, and where in the drawing:
Fig. 1 shows a metal part 1 according to the present invention forming a part of the assembly and method;
Fig. 2 shows a thermoplastic insert 2 according to the present invention forming a part of the assembly and method;
Fig. 3 show in cross section the insert 2 accommodated in the metal part 1;
Fig. 4 shows a perspective view of the insert 2 accommodated in the metal part 1;
Fig. 5 shows in detail section V in fig. 4;
Fig. 6 shows a detail of the anchor in Fig.'s 1, 3 and 4; and
Fig.'s 7 - 12 show similar views as Fig. 6 but of alternative or additional embodiments of anchors according to the present invention.

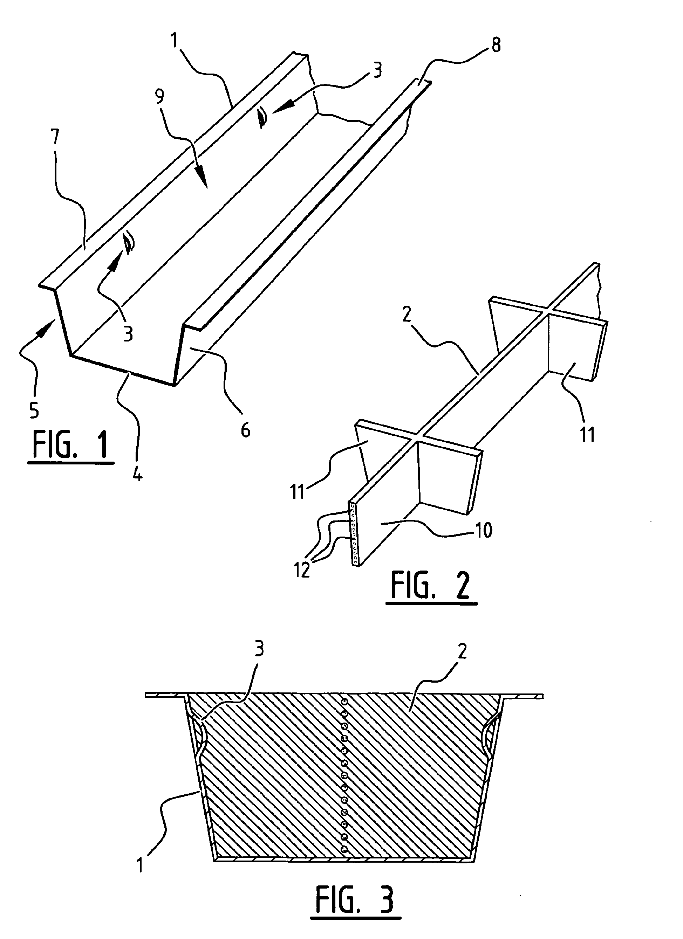

In fig. 1 a perspective view is shown of (a portion of) a metal part 1 according to the present invention. The actual metal part 1 in total may be longer and even comprise bends and turns. The metal part 1 is the product of a press hardening operation, where a substantially flat metal plate (not shown) is heated to an appropriate temperature corresponding with the material of the metal plate, for instance 950°C in case of a steel metal plate. Thereafter the plate was pressed into the shape shown in fig. 1, and allowed to cool down to some extent, which will be described in more detail below.

The metal part 1 has a trough shape with one open side, but could have any other shape, including a shape that is open to more than one side.

The trough shaped metal part in fig. 1 comprises a bottom 4, side walls 5, 6 extending upward from the bottom 4, and flanges 7, 8 extending outward from the free end of a respective one of the side walls 5, 6. Thus the metal part 1 defines a space 9, intended to accommodate a thermoplastic insert 2, like the one shown in fig. 2.

Further the inward oriented surface of the side walls 5, 6 comprise two anchors 3, which will be described in more detail herein below.

In fig. 2 an insert 2 made from thermoplastic material is shown. It is prefabricated prior to assembly with the metal part 2, as described below. The insert 2 comprises an elongate rib 10 and several cross ribs 11. In particular the cross ribs 11 are oversized with respect to the shape and width of the trough shaped metal part 1 between the side walls 5, 6, which is to say that the length of the cross ribs 11 at each height of the insert 2 is at least equal to the width of the trough shaped metal part 1 between the side walls 5, 6 thereof. Also the height of the insert 2 may be at least equal to or higher than the height of the trough shaped metal part 1. The insert 2 comprises a number of reinforcing wires for example met wires, an/or more in particular steel wires 12. Additionally or alternatively the reinforcement could comprise glass and/or carbon fibers.

In the present embodiment, the insert is made from the thermoplastic material polyamide (PA), which in the present embodiment has a melting temperature which is below the temperature to which the metal part has cooled, in the given example of this embodiment (slightly) lower than 250°C.

According to the invention, the metal part 1 is allowed to cool after press hardening at for example 950°C down to for example 250°C, at which time the insert 2 is pressed into the metal part 1, to arrive at the configuration shown in figures 3, 4 and 5, respectively in cross section, a perspective view and in more detail.

The temperature of the insert may be room temperature or may have been raised to (approximately slightly) below the melting temperature of the thermoplastic material preferably between 30 and 150°C, to facilitate melting thereof, in particular the ends of the elongate rib 10 and of the cross ribs 11 oriented towards the inside of the trough shaped metal part 1. The temperature of the metal part 1, after cooling thereof is in any case at or above the melting temperature of the insert 2. However, the temperature of the metal part 1 is preferably not very much higher, for instance only up to 20 °C higher, than the melting temperature of the thermoplastic material of the insert, to prevent excessive melting of the material of the insert.

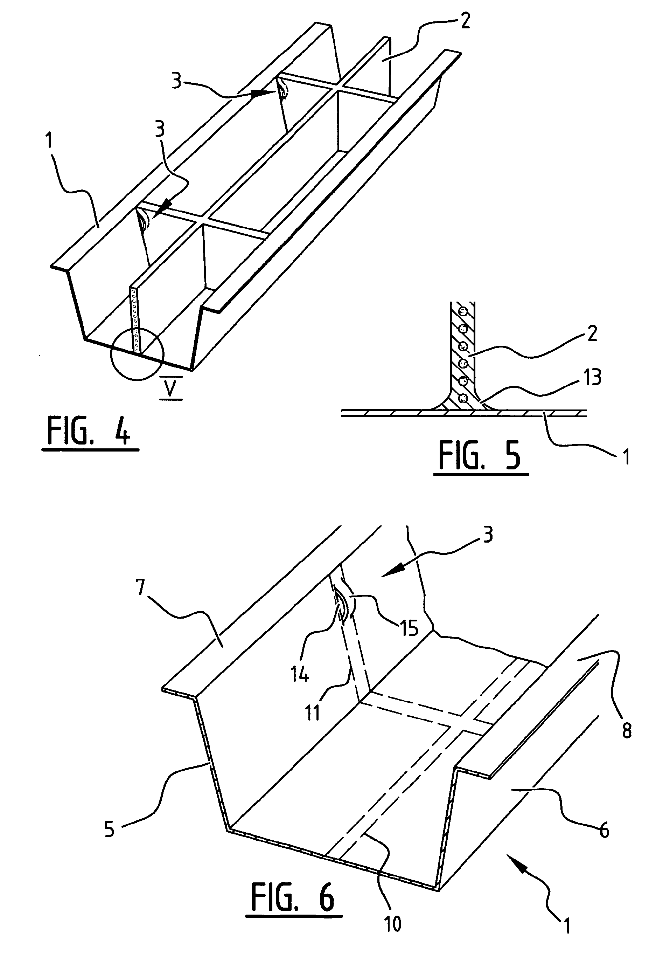

As shown in fig. 5, the thermoplastic material of the insert 2 melts at contact with the metal part. The pressure may contribute to the melting of the insert at the contact areas or regions with the metal part 1. Consequently, some of the material of the insert 2 at contact with the metal part 1 melts and flows to a limited extent, to form the broadened base 13. The broadened bases 13 of the insert in contact with the metal part 1 provides improved adherence or in any case mechanical connection of the insert 2 and the metal part 1.

However, the mechanical connection between the metal part and the insert 2 is further enhanced by the at least one anchor 3 (two anchors in fig. 1) on the inner surface(s) of the side walls 5, 6. The molten thermoplastic material of the insert 2 is described as flowing at contact with the metal part 1, which is to say that it is plasticized to a limited extent. Then, the molten material engages the anchor(s) 3 and solidifies, cures or hardens, with a further decrease in the temperature of the metal part 1. Then hardened thermoplastic material engages and holds the anchor(s). The decrease in temperature of the metal part 1 is moreover promoted by the contact with the insert 2. Forced further cooling may additionally or alternatively be employed.

The at least one anchor 3 of the embodiment of fig. 1 is shown in more detail in fig. 6, and is formed by making incisions 14 in at least one of the side walls 5, 6 and deforming the metal material of the metal part to form an inward bulge 15, preferably during press hardening of the metal part 1. Once the insert 2 is accommodated in the trough shaped metal part 1, and has molten and set, cured or hardened again at the contacts with the metal part 1, indicated with the dotted lines in fig. 6, the anchor is embedded in or enveloped by the cross rib 11. Thus the mechanical connection between the metal part 1 and the insert 2 is enhanced. Similar or other anchors may be provided in the bottom 4 of the trough shaped metal part 1, and/or the other of the side walls 5, 6.

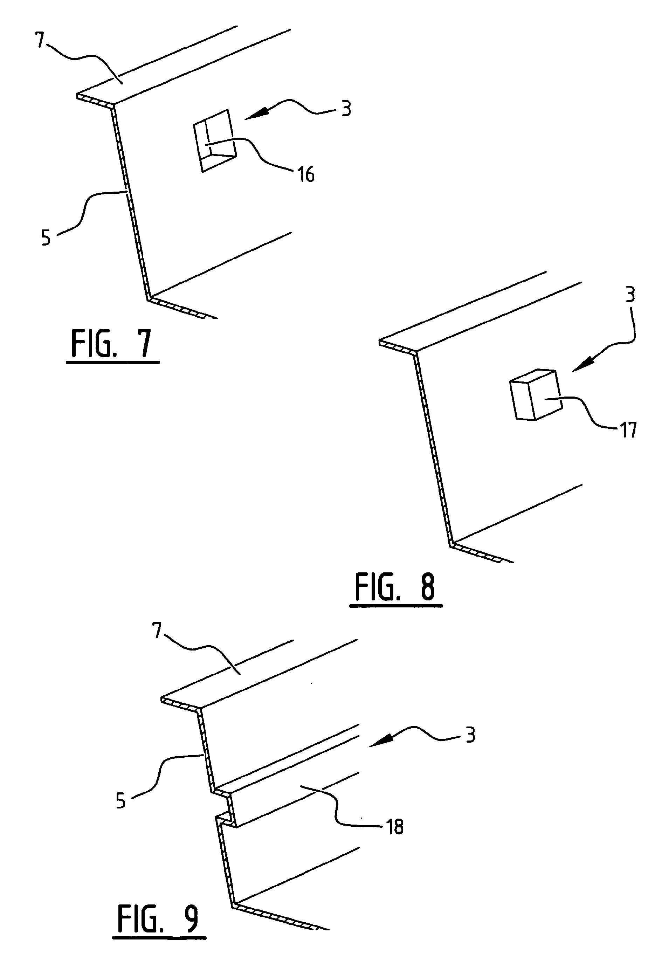

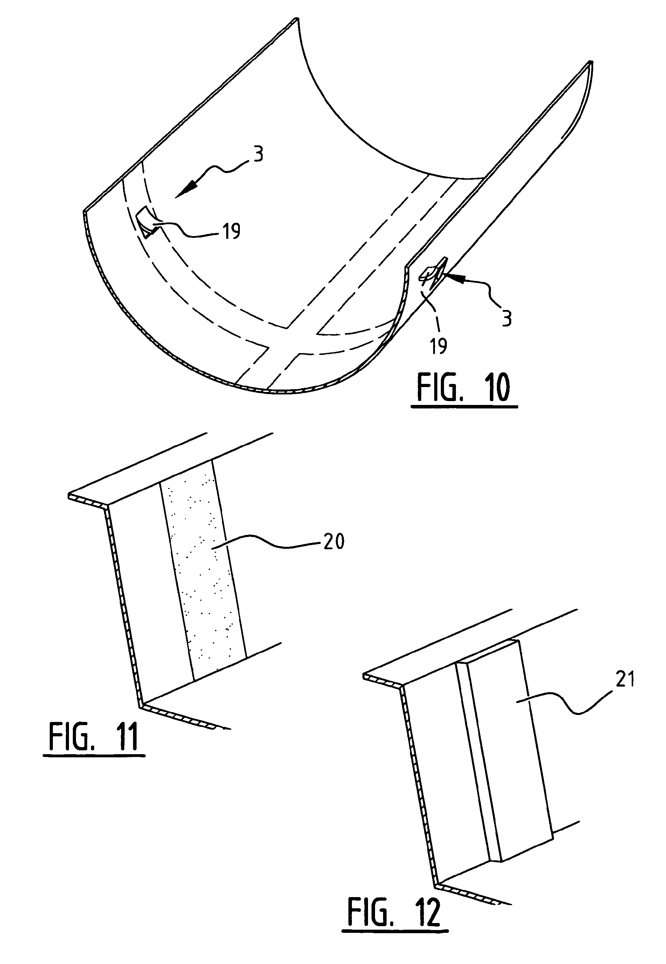

For instance, in fig. 7 another shape of an embodiment of an anchor 3 is shown, where the anchor 3 is shaped as on outward oriented protrusion 16. When material of the insert 2 melts, it fills the hole defined by the outward oriented protrusion 16 to strengthen the mechanical connection between the metal part 1 and the insert 2. Likewise, and as shown in fig. 8, the anchor 3 could be an inward oriented depression or indentation 17. Molten material of the insert 2 after hardening or curing surrounds the indentation 18 to strengthen the mechanical connection between the insert 2 and the metal part 1. Further the anchor 3 could be embodied as a ridge 18, as shown in fig. 9, which would facilitate positioning of the insert 2, when a desired positioning thereof is less than precisely predetermined. The ridge 18 could be outward oriented in an alternative (not shown) embodiment. Fig. 10 shows lips 19 as an further embodiment of anchors 3 according to the present invention. Further, an anchor according to the present invention may be embodied as a surface roughening 20 on a surface of the metal part 1, as shown in fig. 11. Especially in an embodiment 1 wherein the metal part 1 is heated to (slightly) above the melting temperature of the material of the insert 2, a hold enhancer 21 may be employed as an embodiment of an anchor, which is mechanically connected to the metal part 1 and allows the insert 2 to fuse to the hold enhancer 21. The hold enhancer may be a plastic strip as shown in fig. 12, that allows such fusing of the insert thereto. Since not many plastics that allow fusing of the insert thereto, can also survive the heat of the press hardening process, this embodiment is best suited for a situation, when the metal part 1 is heated up to (slightly) above the melting temperature of the material of the insert 2 (rather than be allowed to cool down from for instance 950°C, which could damage the plastic of the hold enhancer).

After having been confronted with the (embodiments of the) invention, many alternative and additional embodiments will immediately become apparent to the skilled person, which are all within the scope of the present invention as defined in the appended claims, and in particular the appended independent method claim, which defines the boundaries of the scope of the present invention (rather than any specifically described or shown embodiment or feature according to any dependent claim). For instance, the inserts need not be entirely made of thermoplastic material; only the contact areas that come into contact with the insides of the walls 5, 6 or bottom 4 of the trough shaped metal part 1 need to melt at contact with the metal part 1 at elevated temperature and while exerting pressure; remaining portions of the insert may be made of another material than thermoplastic material. The anchors - in so far as provided - may have any suitable shape or form. The metal insert may be straight or not, and may be open to more than one side (in contrast with the embodiment of for example fig. 1) and suitably shaped anchors - in so far as provided - could have the form of lips 19, as shown in fig. 10, to be engaged and held by the insert 2. In another preferred embodiment the shape of the anchor provides undercuts in order to enable the thermoplastic material to flow into the metal insert. Thus it will be made clear that only the appended independent claim 1 imposes limitations on the scope of the invention.

## Claims

1. A method for assembling structural component, for instance for a vehicle, the method comprising:
- providing a metal part (1) defining an accommodating space;
- providing a plastic insert (2) having an outer shape at least approximately adapted to the space and accommodating the insert in the space,
further comprising: heating the metal part to an elevated temperature; forming the insert at least partially from thermoplastic material and during assembly accommodating the insert into the space while applying pressure, wherein the elevated temperature of the metal part is at least approximately sufficient to melt thermoplastic material of the insert where the insert and the metal part are in contact, while applying the pressure to accommodate the insert,
CHARACTERIZED BY
forming the metal part, prior to assembly with the insert, in a temperature elevating process, such as press hardening, and allowing the metal part to thereafter cool to the elevated temperature at least approximately sufficient to melt the thermoplastic material while applying the pressure to accommodate the insert.

2. The method of claim 1, further comprising providing the metal part (1) with at least one anchor (3; 14, 15; 16; 17; 18) for the thermoplastic material to engage during assembly and allowing the thermoplastic material to cure through cooling thereof and to thereafter hold the anchor.

3. The method according to claim 1 or 2, comprising oversizing the insert (2) at least partially relative to the space of the metal part and in a direction oriented toward the metal part (1).

4. The method according to claims 2 and 3, comprising oversizing the insert (2) in at least one location corresponding with the at least one anchor (3; 14, 15; 16; 17; 18).

## Patentansprüche

1. Verfahren zum Zusammenbau einer Baugruppe, zum Beispiel für ein Fahrzeug, wobei das Verfahren folgendes umfasst:
- Bereitstellen eines Metallteils (1), das einen Aufnahmeraum definiert;
- Bereitstellen eines Kunststoffeinsatzes (2) mit einer Außenform, die wenigstens näherungsweise dem Raum angepasst ist, und Aufnehmen des Einsatzes in dem Raum,
ferner umfassend: Aufwärmen des Metallteils auf eine erhöhte Temperatur; Bilden des Einsatzes wenigstens teilweise aus einem thermoplastischen Material und beim Zusammenbau Aufnehmen des Einsatzes in dem Raum unter Ausübung eines Druckes, wobei die erhöhte Temperatur des Metallteils wenigstens näherungsweise ausreichend ist, das thermoplastische Material des Einsatzes zu schmelzen, wo der Einsatz und das Metallteil in Kontakt stehen, während der Druck ausgeübt wird, um den Einsatz aufzunehmen,
gekennzeichnet durch
Bilden des Metallteils, vor dem Zusammenbau mit dem Einsatz, in einem Temperaturerhöhungsprozess, wie einem Quettenhärten, und zulassen, dass das Metallteil danach auf die erhöhte Temperatur abkühlt, die wenigstens näherungsweise ausreichend ist, das thermoplastische Material zu schmelzen, während der Druck ausgeübt wird, um den Einsatz aufzunehmen.

2. Verfahren nach Anspruch 1, ferner umfassend Bereitstellen des Metallteils (1) mit wenigstens einer Befestigung (3; 14, 15; 16; 17; 18), mit der das thermoplastische Material während des Zusammenbaus in Eingriff gelangt, und die es dem thermoplastischen Material ermöglicht, durch dessen Abkühlen auszuhärten, und danach die Befestigung zu halten.

3. Verfahren nach Anspruch 1 oder 2, umfassend Überdimensionieren des Einsatzes (2) wenigstens teilweise relativ zu dem Raum des Metallteils und in einer Richtung, die zu dem Metallteil (1) hin ausgerichtet ist.

4. Verfahren nach Ansprüchen 2 und 3, umfassend Überdimensionieren des Einsatzes (2) in wenigstens einer Stelle, die der wenigstens einen Befestigung (3; 14, 15; 16; 17; 18) entspricht.

## Revendications

1. Procédé d'assemblage d'un composant structurel, par exemple, pour un véhicule, le procédé comprenant :
- la préparation d'une partie métallique (1) définissant un espace de réception ;
- la préparation d'un insert en matière plastique (2) présentant une forme externe adaptée au moins approximativement à l'espace et recevant l'insert dans l'espace,
comprenant en outre : le chauffage de la partie métallique à une température élevée ; la formation de l'insert au moins partiellement à partir d'un matériau thermoplastique et, durant l'assemblage, l'ajustement de l'insert dans l'espace tout en appliquant une pression, où la température élevée de la partie métallique est au moins sensiblement suffisante pour faire fondre le matériau thermoplastique de l'insert à l'endroit où l'insert et la partie métallique sont en contact, tout en appliquant la pression destinée à assurer la réception de l'insert,
**caractérisé par**
la formation de la partie métallique, avant assemblage avec l'insert, au cours d'un processus d'élévation de température, tel qu'un durcissement à la presse, et après cela, le refroidissement de la partie métallique à la température élevée au moins sensiblement suffisante pour faire fondre le matériau thermoplastique tout en appliquant la pression destinée à assurer la réception de l'insert.

2. Procédé selon la revendication 1, comprenant en outre l'intégration sur la partie métallique (1) d'au moins un élément d'ancrage (3 ; 14, 15 ; 16 ; 17 ; 18) afin d'assurer le couplage du matériau thermoplastique au cours de l'assemblage et de permettre le durcissement du matériau thermoplastique au cours de son refroidissement et ensuite assurer le maintien de l'élément l'ancrage.

3. Procédé selon la revendication 1 ou 2, comprenant le sur-dimensionnement de l'insert (2) au moins partiellement par rapport à l'espace de la partie métallique et dans une direction orientée vers la partie métallique (1).

4. Procédé selon les revendications 2 et 3, comprenant le sur-dimensionnement de l'insert (2) à au moins un emplacement correspondant à l'au moins un élément d'ancrage (3 ; 14, 15 ; 16 ; 17 ; 18).
